# EUROPEAN PATENT APPLICATION

(11) **EP 2 444 779 A2**
(43) Date of publication of application: **25.04.2012**
(21) Application number: 11397528.8
(22) Date of filing: 25.10.2011
(51) Int. Cl.: G01D 4/00

(54) **A sensor system for improving energy efficiency in a building**

(30) Priority: 25.10.2010 FI 20106105
(71) Applicant: Osakeyhtiö lamit.fi, 44200 Suolahti (FI)
(72) Inventor: Järvinen, Ari, 44200 Suolahti (FI)
(74) Representative: Pursiainen, Timo Pekka

(57) **Abstract**

A sensor system comprising at least one sensor (101, 401) for measuring the ambient conditions of a building or the condition of a building, at least one sensor (102, 402) for measuring a consumption by a functional block of a building, a measuring unit (110, 410), and means for transmitting measurement results from the sensors (101, 401, 102, 402) directly or indirectly to the measuring unit (110, 410). In the sensor system, at least one sensor (101, 401, 102, 402) is arranged to transmit the measurement result in the format of a measurement data pulse directly or indirectly to the measuring unit (110, 410); the measuring unit (110, 410) comprising a first storage means (115). The measuring unit (110, 410) is arranged to receive the measurement data pulse comprising the measurement result, and to store the measurement result in the first storage means (115). A sensor of the sensor system may be arranged to receive the measurement data pulse and to transmit the received measurement data pulse. The sensor system may be arranged to measure the consumption by several buildings and the ambient conditions.

## Description

### Field of the invention

The invention relates to a sensor system in a building, and an electrical switchboard in a building.

### Background of the invention

Social awareness on environmental issues has imposed legislative standards on the consumption of energy in many countries. A significant energy consuming function is housing. For these reasons, some countries, such as Finland, aim at promoting energy efficient construction and housing through building regulations.

At present, energy consumption in buildings is typically monitored in view of complexes. In buildings, it is possible to measure the consumption of electricity, the consumption of district heating, the consumption of fuel, such as gas, oil, wood, or pellets, the consumption of water, and possibly the consumption of cooling in the whole building. In prior art, it is also known to partition the measuring of the consumption of electric energy and water in the whole building according to apartments in housing companies. Furthermore, for example US 201001164750 discloses power consumption meters, by which the power consumption of single devices can be measured and transmitted further in a wireless manner by radio communication. Such a single meter can also measure the temperature of the operating environment. The device is arranged to by be plugged in, but it comprises a battery as a safeguard. The device does not store the measurement results, and it is not connected to a system for combining several measurement results or for analysing the measurement results.

US 20090058676 discloses reading of several stationary consumption meters by several reading devices, and the connecting of these reading devices to a communications network, particularly for the needs of the energy provider. Furthermore, US 20030034900 and US 6,172,616 also disclose measuring the consumption of water and gas and transmitting the measurement results over a communications network. Furthermore, one consumption meter can be used as a link between other consumption meters and the communications network. According to US 7,263,450, the user himself or herself can also monitor and control the operation of electrical devices on his or her computer.

In some cases, the reading of meters is based on automatic pattern recognition, whereby the reading of a conventional meter is recognized optically and transmitted, for example, over a communications network (the Internet) to the electricity supplier. Such a solution is presented in US 20060103549.

The prior art involves some drawbacks. For example, the power consumption meters are not arranged to measure the consumption of electricity by certain functional segments, such as lighting, heating, air conditioning, or the like. To improve the energy efficiency of a building during its use, it is important to know such consumptions. Furthermore, in the solution of prior art, it is difficult to forecast the consumption, because ambient conditions are typically not measured in remote readable meters, and such data is not transmitted to be analyzed. For analyzing the energy consumption, it may also be important to know, for example, the temperature and the moisture content, and possibly the wind and the pressure prevailing inside the building, in the structures of the building, and outside the building. Moreover, such data can preferably be forwarded to a party that can apply it, for example, for improving the energy efficiency, for invoicing, or for giving a certificate on the energy performance, for example in a situation of selling the building or an apartment. The energy efficiency can be improved particularly by taking into account the condition of the building and the ambient conditions, for example too high a room temperature, too high a pressure in the water supply system, or too much ventilation with respect to the occupancy rate of the building. Furthermore, the energy efficiency can be improved by various alarms and quick availability of data, and particularly by automatic control of devices.

### Brief summary of the invention

It is an aim of the present invention to disclose a system, by means of which it is possible to compile data on consumption and the operating environment of buildings in a versatile way and thereby to reduce the drawbacks described above. The sensor system according to the invention for a building is characterized in what is presented in the characterizing part of the independent claim 1.

The other embodiments of the invention are described in the dependent claims.

### Description of the drawings

In the following, the invention will be described in more detail with reference to the appended drawings, in which
- Fig. 1: shows a sensor network system for use in buildings,
- Fig. 2: shows the joining of some buildings in a sensor network system,
- Fig. 3: shows an electrical switchboard ,
- Fig. 4: shows a part of a sensor network system for use in buildings, and
- Fig. 5: shows a measuring unit and its communication with a central processing unit.

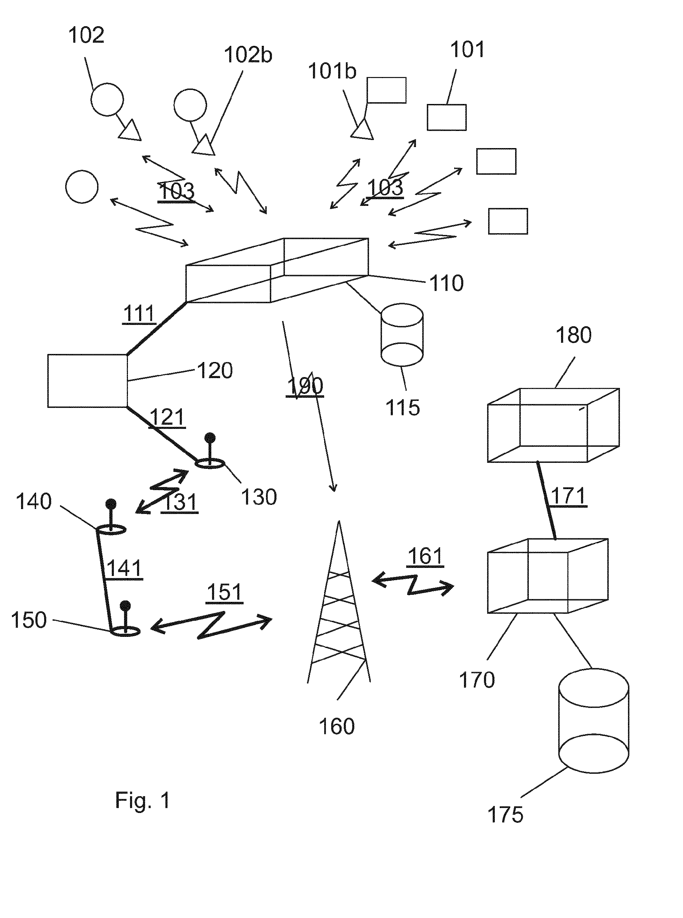

In Figures 1 to 5, the same numerals or symbols are used for corresponding parts.

### Detailed description of the invention

Figure 1 shows a sensor network system. The sensor network system may comprise sensors 101 for measuring ambient conditions or the condition of a building, as well as sensors 102 for measuring a consumption in the building. The sensors for measuring ambient conditions and the condition of the building may include, for example, sensors for measuring the temperature, the moisture content, the pressure, the carbon dioxide content, a flow rate, the luminosity or place of lighting, and they may operate either indoors, outdoors, or within the structures of the building. The structures of the building also include the inner parts of water pipes or air conditioning pipes. Several sensors may be provided inside the building; for example, the temperature and the quality of air can be controlled separately for each room. The sensors may be wired or wireless depending on whether they send their data to the measuring unit 110 along a wire or without a wire, for example by radio communication or optically. Possibly, the sensor, for example a consumption sensor 102, is provided with a separate wireless transmitter 102b for transmitting data wirelessly from the sensor. In a corresponding manner, sensors for measuring ambient conditions could be provided with a wireless transmitter 101 b. In practice, this is a less frequent case, because many such sensors comprise a wireless transmitter. Moisture sensors can be used for measuring, for example, the drying of structures, or indirectly the thermal insulation capacity of the structures. Flow rate sensors can be used for measuring, for example, the wind speed or the quantity of heat transferred in heat exchangers. Sensors for measuring a location can be based on, for example, a satellite positioning technique, such as the GPS technique (Global Positioning System), and they can be placed in connection with another specific sensor or the measuring unit 110.

The sensors for measuring a consumption can measure, for example, the use of district heat, electricity, water, oil, gas, or cooling, such as district cooling. Furthermore, the sensors for measuring a consumption can be advantageously arranged to measure the consumption of various functional blocks. A functional block refers to a complex of specific, possibly similar devices or functions. Such a functional unit is not necessarily but may also be a whole building. The sensors may be arranged to measure separately, for example, the quantity of electric energy consumed by ventilation, a cooling system, lighting, heating, cooking, cold storage, water circulation, washing machines, and drying machines. Naturally, the whole building, a single apartment in it, a part of an apartment, or a single device in the building or in an apartment, may also constitute a functional block where the sensors are arranged to measure the consumption of electric energy. In a corresponding manner, the sensors may be arranged to measure separately the use of cold and hot water, or the use of water for different functions, such as washing, dish washing, washing of clothes, and the use of water in the toilet bowl. In view of heat energy, the sensors may be arranged to measure separately the heat energy used for heating the building and the heat energy used for heating service water, for supplying hot service water. For the heat energy, the sensors may also be arranged to measure separately heat energy removed from the building by a cooling system and, for example, heat energy removed from cold storage spaces and from indoor air of the building. Correspondingly, in a building connected to a district cooling network, the sensors may be arranged to measure the heat energy removed from the whole building or separately from the cold storage spaces and the indoor air of the building into the district cooling network. Furthermore, some of the sensors 101 measuring the condition of the building or ambient conditions may be arranged to measure the quantity of heat energy recovered or removed by heat exchangers, or cooling energy produced in a cooling system. From the energy recovered by heat exchangers, it is possible to determine the performance of the heat exchangers.

The sensors 101 measuring the condition of the building as well as the sensors 102 measuring a consumption in the building are arranged to transmit the measured data to a measuring unit 110. The data transmission is preferably carried out in a wireless manner, for example by radio communication. This is illustrated by arrows 103 in Fig. 1. The data can also be transmitted through an electric wire, or optically, inductively or acoustically. The measurement data can be processed, for example, in a central processing unit 170 which can be operated by the user on his/her own computer 180. The user's computer 180 can be connected to the central processing unit 170 along a local area network 171, or this connection can be another data network connection known as such. The central processing unit 170 can be located apart from the building to be measured. The data transmission from the measuring unit 110 to the central processing unit 170 can take place by techniques of prior art, and the data can be transmitted directly or indirectly to the central processing unit. If the data is transmitted indirectly, the data can be passed, for example, over a wired local area network 111, 121 and 141 and/or a wireless local area network 131 via routers 120, 130, 140 to a transmitter 150 which transmits messages containing measurement data to a telephone network. There, the data can be passed over the telephone network 151, 160 via one or more base stations 160 to the central processing unit 170.

The measuring unit 110 can be arranged to support, for example, the m-bus protocol, wherein it may be possible to connect several different sensors 101, 110 supporting this protocol to the measuring unit. Said protocol is common in energy meters. The operation of the measuring unit may be based on a finished commercial product family. With such a choice of devices, it is possible to achieve fast and flexible development of measuring software products. Furthermore, the manufacturer of the measuring unit may provide several wireless products for combining different components in a system for supplementing the measurement of a consumption, such as the measurement on electricity and heat energy as well as the measurement on the consumption of water, with measurements on the ambient conditions of a building or the condition of the building itself, such as measurements on moisture and temperature of indoor and outdoor air. Possibly, the software of such commercial consumption or ambient sensors 101, 102 have to be modified by taking into account the interface on which the measuring unit 110 receives measurement data. The primary function of the measuring unit 110 is to forward the consumption data and ambient data from the sensors 101, 102 to the central processing unit.

The software of the measuring unit 110 may be based on the platform of the device manufacturer, wherein all the products of said manufacturer are easily usable with the measuring unit. In receiving the data, it is possible to use well-known commercial (driver) software solutions, such as XBee, m-bus, or programs for receiving data from GPS sensors. Furthermore, programs can be compiled for the measuring unit or the sensors, for connecting futher sensors to the system. For example, software solutions can be applied to connect an RS232 connected energy meter or an m-bus gateway to the system.

In an embodiment of the invention, the sensors 101, 102 transmit their measurement data in the form of pulses to the measuring unit. The consumption sensors 102 can be arranged to send a measurement data pulse at given consumption intervals, for example each time when one kilowatthour of electrical or heating energy or a given quantity of water has been consumed after the transmission of the preceding measurement data pulse. In such pulse transmission, the data transmission is naturally adapted to the consumption, because the transmitting sensor reduces data transmission during low consumption and increases data transmission during higher consumption. In a corresponding manner, ambient data sensors 101 can transmit a measurement data pulse at given intervals. Furthermore, the consumption sensors 102 may be arranged to transmit a measurement data pulse at given intervals. The measurement data pulse may comprise information from several measurements. A separate transmitter unit 101 b, 102b can be arranged to compile measurement data from the sensor 101, 102 for forming a measurement data pulse. Also, the sensors as such can compile the measurement data for the measurement data pulse. Possibly, some commercial sensors are not provided with such pulse transmission but it can be separately programmed in the sensors.

The measuring unit 110 may be, in turn, arranged to receive such measurement data in pulse format. As the system may comprise several sensors 101, 102 for each measuring unit 110, the frequency of the pulses may vary significantly. Typically, the interval between two measurement data pulses may vary from 1 ms to 1 s. The software may store the measurement data from the sensors into an internal channel database in the measuring unit. The channel database may be located in a (first) storage means 115 within or outside the measuring unit. The data can be stored in the channel database on each arrival of a measurement data pulse. Storing data in the channel database in the measuring unit is advantageous, because if the communication network is busy, the measurement data cannot necessarily be forwarded at once on the arrival of the measurement data pulse. Furthermore, the time between two measurement data pulses may be very short, wherein the immediate transmission of the received measurement data would complicate the reception of the next measurement data pulse. In an embodiment of the invention, only the latest reading of each sensor is stored in the channel database, the latest reading of the consumption data referring to the latest cumulative consumption reading of the sensor in question. In a simple embodiment, the storage means 115 comprises a memory in which this latest data is stored.

In addition to the first software, second software of the measuring unit may forward the data of the channel database to the central processing unit 170, for storage. The second software can also transmit measurement data in pulse format. The second software may be arranged to transmit measurement data at given intervals, for example at intervals of 1 to 60 minutes, and preferably at intervals of about 10 minutes. In this embodiment, the measuring unit generates a measurement message which comprises data on one or more measurement results, and transmits this measurement message at given intervals to the central processing unit. The measurement message can be generated by using only cumulative consumption readings and latest data measured from the environment, or it can be formed by using temporally different measurement data. The central processing unit receives the measurement message, may decode the measurement message into at least one measurement result, and may store the measurement results. The central processing unit may be programmed to use the measurement message or measurement results and to generate and possibly also transmit various messages, for example alarms, illustrations and certificates, automatically or under control by the user. Automatic transmission can take place, for example, at given intervals or upon going above or below some limit values. The user can control the system, for example, by a user interface. The user interface can be arranged to be based on an Internet browser or a command interpreter. Furthermore, it may be possible for the user to control the system by phone, by a text message, or by e-mail.

Consequently, the system according to the invention comprises sensors and a measuring unit, and the communication interface between these can be based on pulse transmission. The measuring unit can transmit a measurement message containing this data at regular intervals to the central processing unit. The communication interface between the measuring unit and the central processing unit may be a well-known data network based interface. The central processing unit may be arranged to analyze and compare the measurement data, as well as to produce, among other things, alarms, reports and certificates on the basis of the measurement data. Furthermore, the central processing unit may be arranged to transmit alarms, reports or certificates to the user and to receive commands given by the user, via the user interface.

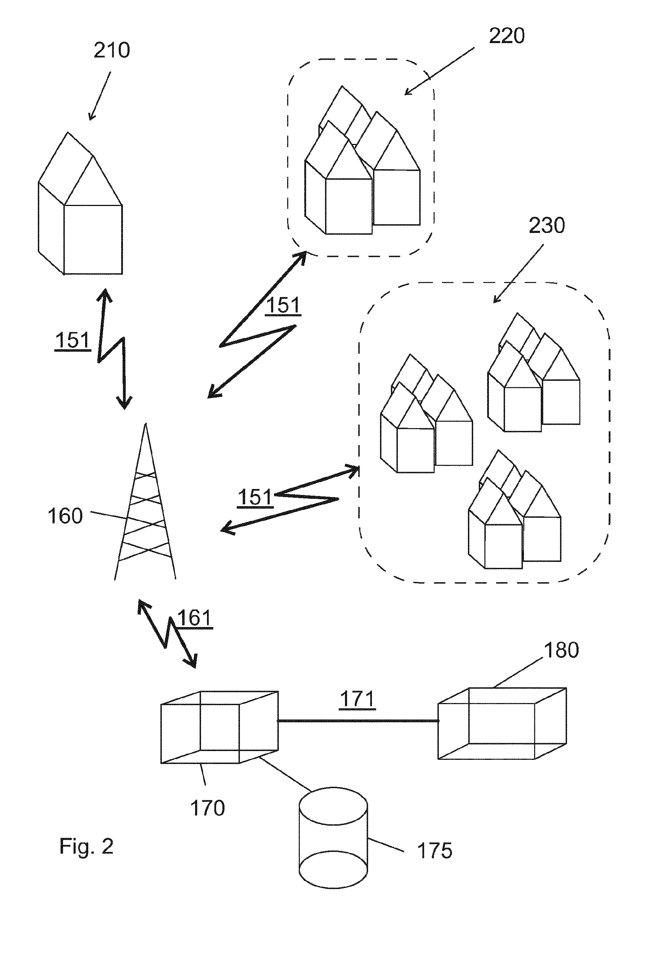

Figure 2 illustrates an embodiment of a sensor network system. The measuring unit or measuring units 110 may provide information via local area networks 111, 121, 131 to the central processing unit 170 (Fig. 1). The central processing unit may compile measurement data, possibly apartment or building specific measurement data, from a single building 210, a group 220 of buildings 220, or an assembly 230 of groups of buildings. In the case of a single building, the building can comprise a measuring unit 110 and the means necessary for transmitting data to a telephone network. In the case of a group of buildings, a single measuring unit can be used as a common measuring unit for all the buildings, or each building can have its own measuring unit. If several measuring units 110 are provided in a group of buildings, these may forward measured data across a wireless local area network 131 to a transmitter 150 of a telephone network, which will then transmit the measurement data on the whole group of buildings to the central processing unit 170. Similarly, in the case of an assembly of groups of buildings, one or several measuring units may be provided. Preferably, each building is provided with one measuring unit, the data transmission within each group of buildings takes place in a wireless local area network 131, and the data on the groups of buildings are compiled via a wired local area network 141 to be transmitted to the central processing unit. Consequently, a wireless local area network 131 may be provided between the buildings, within groups of buildings; a wired local area network 141 between groups of buildings; and a transmitter 150 can send the measurement data on the whole assembly of groups of buildings to a telephone network.

The central processing unit 170 may be arranged to generate and transmit a message, for example an e-mail message, a phone call or a text message, to a defined recipient, if there is anything abnormal in the measurement data. Typically, a range has been defined for a variable to be measured, a deviation from the range causing an alarm. Such variables may be, for example, the moisture content, if, for example, the drying of a cast concrete floor or another element is measured, or the temperature, if it is monitored that a building remains unfrozen in the winter, when the basic temperature of the building has been lowered significantly. The system may transmit a message of such a deviation. Correspondingly, the system may transmit a message, if a consumption reading from any device, functional block, apartment, or building deviates from the given range. Thus, it may be possible to detect, for example, a broken water pipe, and to generate and transmit a leak alarm. A relatively short time span in the transmission of measurement data from the measuring unit 110 to the central processing unit is advantageous, particularly if the central processing unit is arranged to generate and transmit a message by using the measurement data. In an embodiment of the invention, the measuring unit 110 may also be arranged to generate such a message and to transmit it to a defined recipient, who may also be another recipient than the central processing unit, for example the user. This gives the advantage that the transmission of critical alarms is not dependent on the operation of the data network, and the term of transmitting the pulse will not cause a delay in the transmission of the message. Hereinbelow, the term first message will refer to such a message generated by the central processing unit, and the term alarm message will refer to a message generated by the measuring unit. The measuring unit 110 may transmit the alarm message, for example, along a telephone network 190 to a base station 160 of the telephone network, from which it can be forwarded to the user (Fig. 1).

The central processing unit may be arranged to give proposals for action on the basis of the measurement results, for optimizing the consumption of energy and water. For this reason, the central processing unit may be arranged to store measurement data in a second storage means 175 and to read stored data from the second storage means 175. Furthermore, the central processing unit may be arranged, by using the read measurement data, to estimate a deviation in a consumption, the temperature or another measured variable from a trend value, for example, a long-term average or a moving average. Furthermore, the central processing unit may be arranged to use the read measurement data to estimate an increase or decrease in the consumption of energy or water. In an advantageous embodiment, several measuring units provide ambient and consumption data on several buildings to the same central processing unit 170 which stores this data in its database on a storage means. The central processing unit 170 may be arranged to compare this data statistically to evaluate the relative energy efficiency of the building. On the basis of this evaluation, the central processing unit may be arranged to generate a second message based on the read measurement data. The message may be, for example, a proposal for action, an energy account, an energy performance certificate, or a consumption report. Furthermore, the proposal or report may be automatically drawn up in a presentation format, and it may comprise a calculation on the ambient effects, such as emissions, of the use of energy, based on the measurements. In this context, an energy performance certificate refers to an energy performance certificate of new constructions or old real estate according to the national law; the legal name of the report may vary according to the country. Furthermore, the central processing unit may be arranged to transmit a second message to the user or the client.

In an embodiment of the invention, the central processing unit 170 comprises a measuring unit 110. In this case, the measuring unit 110 may transmit the measurement data to the central processing unit 170 along an internal bus in the central processing unit. It is thus also possible that the first storage means 115 and the second storage means 175 are the same.

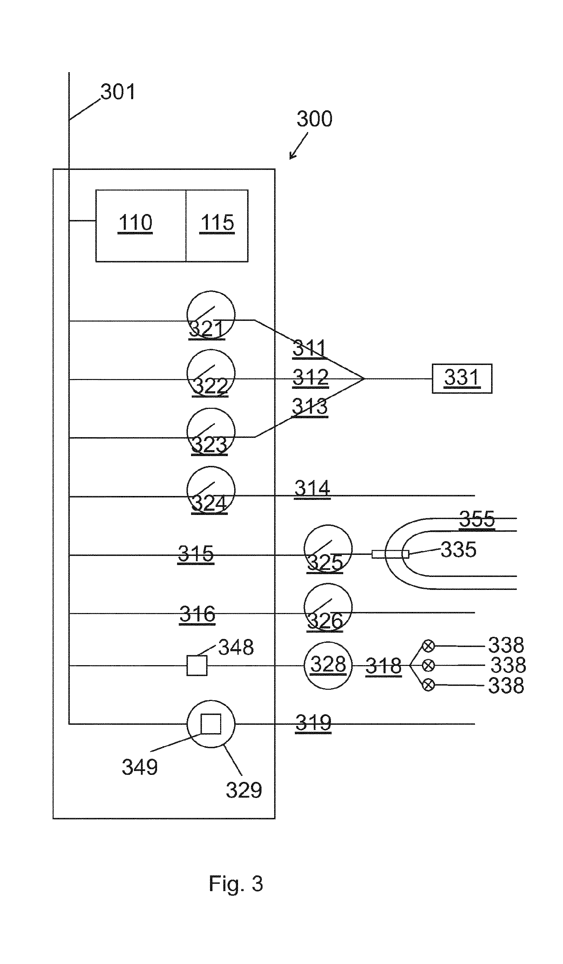

In an advantageous embodiment, the measuring unit 110 is arranged as a part of the electrical switchboard of the building. The electrical switchboard of the building may be located in, for example, a main distribution room, a group distribution room, or a sub-distribution room. This embodiment is illustrated in Fig. 3 which shows an electrical switchboard 300 comprising a measuring unit 110. Furthermore, the first storage means 115 is arranged as a part of the measuring unit. Electricity is supplied from an electricity distribution network 301 to the electrical switchboard. In the electrical switchboard, it is possible to define those electric lines which constitute a measurable functional block. Combining the consumption data from different electric lines can be done in the measuring unit, if necessary. For example, in Fig. 3, electricity in three different phases can be conducted to an electric sauna stove 331 by cables 311, 312 and 313. Each cable may be provided with a separate electricity meter 321, 322 and 323, and the consumption data from these can be combined in the measuring unit or the central processing unit. Naturally, consumption through a single cable 314 can also be measured with a sensor 324. Such a sensor may be placed in the electrical switchboard, like the sensor 324, or the consumption through a single cable 316 can be measured with a sensor 326 outside the electrical switchboard. It is also possible to connect the electric lines of one functional block as one group, for example by coupling the electric lines or devices of this functional block in parallel. This functional block can be connected downstream of the same fuse 348, and the electric current through this fuse can be measured. For example, a set of illuminators 338 may be arranged in parallel on the same cable 318, wherein a consumption sensor 328 is provided to measure the overall consumption by all these illuminators. In this example, the illuminators 338 constitute a functional block.

Such a fuse 349 may, in itself, comprise an electricity meter 329 and possibly a memory for storing the consumption data at intervals, and a transmitter for transmitting the consumption data and/or the consumption data stored in the memory, to the measuring unit. Correspondingly, the electricity sensor 329 may comprise a fuse 349. If such a fuse is used in the sensor system of the building, the measuring unit does not necessarily need to be a part of the electrical switchboard. If the measuring unit is a part of the electrical switchboard of the building, it is natural that at least some of the consumption sensors 102, particularly the sensors measuring the consumption of electricity, are arranged as a part of the electrical switchboard. In Fig. 3, such sensors in the electrical switchboard include the sensors 321-324 and 329. In a corresponding manner, the sensors 325-328 are placed outside the electrical switchboard.

If the fuse comprises an electricity sensor, it can be supplied with energy from the electrical network, for example by induction. Furthermore, if such a fuse comprises a memory, at least part of it may be a so-called a non-volatile memory which stores the data stored in the memory for some time even after the operating voltage has been cut off for any reason, for example because of a power failure in the electric distribution network. Thus, the data collected before the power failure is very likely to be readable from the memory of the fuse when the operating voltage is connected to the fuse again.

The measuring unit 110 can also be arranged to control some electrical devices, such as an electric sauna stove 331, in the building. This is illustrated in Fig. 3. The electric device may also be, for example, an electrically controlled relay or a magnet valve 335 for controlling the flow of water in a pipe system 355. For example, the power of the electric sauna stove 331 or the heating system of the building can be controlled by the measuring unit, if necessary. In some advantageous embodiments, the measuring unit 110 comprises a receiver, with which the measuring unit 110 can receive control messages, for example from the central processing unit 170. The data line can be a wired connection or a wireless connection. In some embodiments, control messages can be forwarded via the electric distribution network 301, wherein no separate communication network is needed. Furthermore, the measuring unit 110 can generate control signals from the control messages and transmit control signals to such electrical devices which are arranged to be remote controlled. The control signal may be, for example, switching off of a device, such as a sauna stove 331 or an inlet valve 335 for service water. Such a control may take place automatically, for example when the system detects an abnormal increase in the water consumption and the moisture content, from which the system concludes a leak situation. The control may also be instructed by the user, for example by means of a message sent by the user to the central processing unit. The user may send the message, for example, from his/her computer by e-mail or via the user interface, or the user may send a text message to the central processing unit by his/her telephone. On the basis of such a message, the central processing unit may generate either one or several control messages to the measuring unit. In a corresponding manner, the measuring unit may generate one or several control signals on the basis of one or several control messages. For example, by means of one absence message, the user can switch off all the devices which are typically not used when the building is not occupied, such as the sauna, kitchen utensils (excluding the cold storage devices), washing machines, lighting, and entertainment electronics. If the electric system of the building comprises an occupancy switch, such a switch can also be arranged to be remote controlled. Such control functions may save energy and/or water, particularly when automatic.

A simple example of a remote controlled device is a remote controlled switch. Thus, the switch comprises a receiver for receiving a control signal, and a control means, such as a relay, for performing the function indicated in the control message, for example to switch off power supply to the device connected to the switch, or to adjust the power supply to a lower level. With the switch, this can be implemented, for example, to switch off one or more phases 311, 312 or 313 of a device powered with three-phase current, such as a stove 331, by a remote controlled switch 321, 322 or 323. This solution is also applicable for controlling, for example, ovens. A remote controlled fuse can also be used as a remote controlled switch. Furthermore, the remote controlled switch can be arranged in connection with a consumption sensor, as shown by reference numerals 321 to 326. Other kinds of remote controlled devices are also possible. For example, it is feasible that the electric device is provided with remote power control, for example stepless control of heating or illumination, and the measuring unit 110 is arranged to transmit control signals to the remote control units of such devices. In this case, the control signal can be used, for example, to set a desired power level or to increase or decrease the power without switching off the device.

The communication between the measuring unit 110 and the sensors 101, 102 is preferably implemented in such a way that commercial sensors can be applied in connection with the measuring unit.

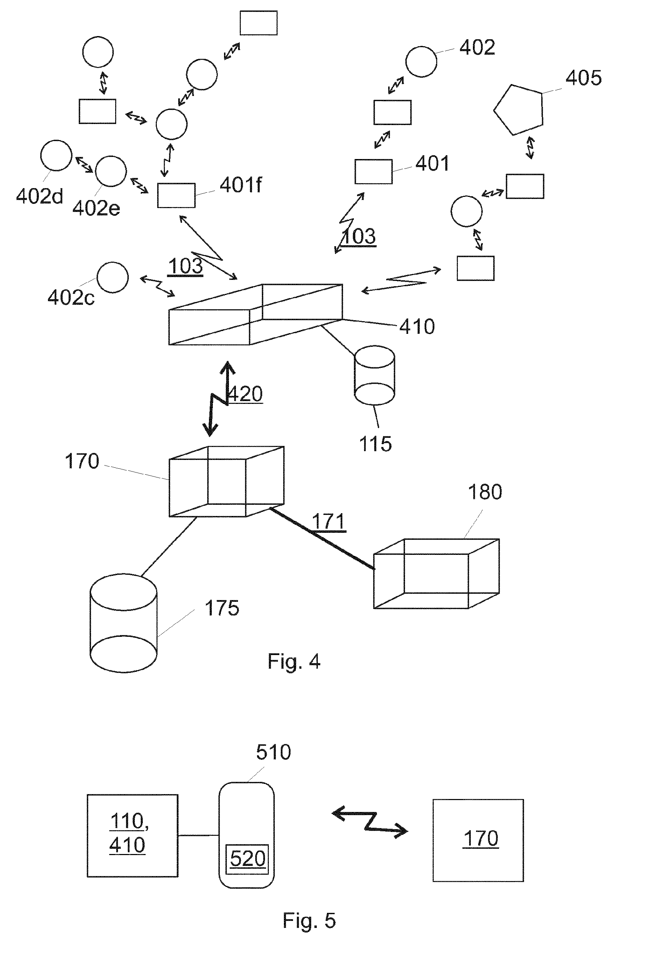

Figure 4 shows part of a sensor system. The figure shows sensors 401 for measuring the condition of a building and sensors 402 for measuring a consumption in the building. The sensors 401 and 402 can measure, for example, the same variables as the sensors 101 and 102 discussed above. The sensors may be wired or wireless. The sensors 401 and 402 are arranged to transmit their measurement data to the measuring unit 410 or another sensor. The sensors are also arranged to receive measurement data from another sensor. At least one sensor can comprise a separate transceiver unit (not shown in the figure).

With reference to Fig. 2, some of the sensors 101, 401, 102, and/or 402 can be placed in a first building 210 and some of the sensors in another building 210. Correspondingly, some of the sensors 101, 401, 102, and/or 402 can be placed in a first group 220 of buildings and some of the sensors in another group 220 of buildings. Correspondingly, some of the sensors 101, 401, 102, and/or 402 can be placed in a first assembly 230 of groups of buildings and some of the sensors in another assembly 230 of groups of buildings. It is an advantage of the system that the data obtained from the sensors 101, 401, 102, and/or 402 measuring different buildings 210 is transmitted to the same central processing unit 170. In this way, it is possible to compare the consumption data from different buildings and to optimize the consumption in the buildings. In a corresponding way, it is possible to compare the consumption in groups of different buildings or in different assemblies of groups of buildings.

In Fig. 4, the sensors 401 measuring the condition of a building as well as the sensors 402 measuring the consumption in the building are arranged to transmit the measurement data to the measuring unit 410 either directly or via at least one sensor. As shown in Fig. 4, the data can also be forwarded via several sensors to the measuring unit 410. The measuring unit can further be arranged to forward the measurement data to the central processing unit 170 across a data network 420. The data network 420 may comprise substantially similar parts as discussed in connection with Fig. 1. The measuring unit 410 can act as the central processing unit 170, or the central processing unit 170 may comprise the measuring unit 410. Measurement data can also be transmitted in the format of a measurement data pulse.

In the sensor network of Fig. 4, a first sensor 402 or 401 is arranged to perform at least one of the following:
- to receive a measurement data pulse containing identification and measurement data from another sensor or terminal,
- to store identification and measurement data contained in the measurement data pulse in a storage means,
- to read identification and measurement data from a storage means,
- to check the meeting of criteria for transmitting a measurement data pulse,
- to transmit the received measurement data pulse containing idenfication and measurement data,
- to measure measurement data on the condition of a building or on a consumption in the building,
- to generate a measurement data pulse containing identification and measurement data by means of the idenfication of said first sensor, a data receiving party, and measured measurement data,
- to generate a measurement data pulse containing identification and measurement data on the basis of read identification and measurement data,
- to transmit the generated measurement data pulse containing idenfication and measurement data.

Consequently, some of the sensors can measure, generate and transmit measurement data. In addition, some of the sensors can forward measurement data. The identification data comprises information for identifying the sensor or the device, from which the measurement data originates from. The identification data also comprises the identification of the party to receive the information. The party to receive the information may be, for example, the central processing unit 170. The identification data may comprise, for example, a number that identifies the sensor, and a number that identifies the central processing unit. On the basis of the number of the central processing unit, the measuring unit 410 can find out the address of the central processing unit 170, for example the IP (internet protocol address) number of the central processing unit in the data network. The party to receive the information can also be identified by the address of the receiving party. Thus, the identification data may comprise, for example, a number that identifies the sensor and the address of the central processing unit.

In addition, some of the sensors can receive measurement data pulses and store the data of the measurement data pulse in a storage means of the sensor, for example in the memory of the sensor. In this way, the storage means of the sensor can be used as a buffer in situations of heavy communication between the sensors. The storage means can be placed in a sensor or in a separate sensor transmitter (cf. Fig. 1). The sensor or sensor transmitter can be arranged to buffer data contained in several, for example several thousands of measurement data pulses. The sensor or sensor transmitter can be arranged to transmit information from the storage means when allowed by communication between other sensors. The sensor can be arranged, for example, to monitor the communications and to transmit a measurement data pulse or pulses only when a pause of a predetermined length has been detected in the communication between the other sensors.

The measurement data may comprise, for example, momentary or cumulative consumption data. The measurement data may also comprise ambient data, such as a flow rate or a temperature. The measurement data may comprise measured values of several different variables. For example, one sensor 101, 102, 401, 402 may be arranged to measure several variables, such as the temperature and the pressure. The measurement data may also comprise values obtained from different sensors, from which values it is possible to conclude consumption data, ambient data or other data. Such values may indicate, for example, the voltage or current in the sensor. Furthermore, some sensors may measure for example acoustically or optically, wherein the measurement data may also comprise data that represents sound or image. Furthermore, messages specified by the user can be forwarded as measurement data in the sensor network. A terminal 405 can be connected to the sensor network, by means of which terminal the user can transmit messages via the sensor network to the central processing unit 170. The terminal 405 is arranged to perform at least one of the following:
- to receive a measurement data pulse containing identification and measurement data from another terminal or sensor,
- to store identification and measurement data contained in the measurement data pulse, in a storage means,
- to read identification and measurement data from a storage means,
- to check the meeting of criteria for transmitting a measurement data pulse,
- to transmit the received measurement data pulse containing idenfication and measurement data,
- to receive measurement data from the user via the user interface of the terminal,
- to generate a measurement data pulse containing identification and measurement data by means of the idenfication of said first sensor, a data receiving party, and measurement data received from the user,
- to generate a measurement data pulse containing identification and measurement data on the basis of read identification and measurement data,
- to transmit the generated measurement data pulse containing idenfication and measurement data.

The sensors 401, 402 may be arranged to generate said measurement data pulse containing identification and measurement data at given intervals or at given consumption intervals. The measurement data pulse may contain measured consumption data or ambient data from several measurements, and the measurement data pulse may comprise information about the measuring time or times. The consumption data may be momentary consumption data or cumulative consumption data.

In the sensor network of Fig. 4, the measuring unit 410 is arranged to perform at least the following operations:
- to receive a measurement data pulse containing identification and measurement data from a sensor 401, 402, and
- to decode said measurement data pulse, to find out the recipient.

In the sensor network of Fig. 4, the measuring unit 410 may also be arranged to perform at least one of the following:
- to transmit said measurement data pulse to said recipient,
- to transmit part of said measurement data pulse to said recipient,
- to compare said recipient with information in a recipient database and, on the basis of the comparison, possibly to transmit at least part of said measurement data pulse to said recipient; and
- to decode said measurement data pulse to find out the measuring sensor, to compare said sensor with information in a sensor database and, on the basis of the comparison, possibly to transmit at least part of said message to said recipient.

The measuring unit 410 may, for example, automatically transmit all the measurement data pulses received by it to the recipient. The measuring unit 410 may, for example, transmit a part of each measuring data pulse received by it to the recipient, for example a part from which the recipient information has been deleted. The measuring unit may be arranged to transmit at least a part of only given measurement data pulses to the recipient. For example, the measuring unit may be arranged to transmit information of only such measuring data pulses whose recipient is identified by the measuring unit. The measuring unit may comprise a recipient database comprising information of the recipients, to which at least part of each measurement data pulse is to be transmitted. Thus, at least part of the measurement data pulse is transmitted to the recipient only if the recipient is included in the recipient database. In another example, the measuring unit may be arranged to transmit information of only such measurement data pulses which comprise measurement data measured by given sensors. The measuring unit may comprise a sensor database which comprises information on the sensors whose measurement data is to be forwarded. Thus, at least part of each measurement data pulse is transmitted to the recipient only if the sensor that measured the measurement data is included in the sensor database.

With reference to Fig. 2, the sensor system may comprise several measuring units 110 and/or 410. The different measuring units 110 and/or 410 may be arranged to receive information from sensors 101, 401, 102, 402 measuring different buildings 210. The different measuring units 110 and/or 410 may be arranged to receive information from sensors 101, 401, 102, and/or 402 measuring different groups 220 of buildings. The different measuring units 110 and/or 410 may be arranged to receive information from sensors 101, 401, 102, and/or 402 measuring different assemblies 230 of groups of buildings. In an embodiment, the system comprises a first and a second measuring unit 110, 410. The first measuring unit 110, 410 is arranged to receive measurement data pulses from sensors 101, 401, 102, and/or 402 measuring the condition of a first building or its environment, or a consumption by a functional block of said first building. The second measuring unit 110, 410 is arranged to receive measurement data pulses from sensors 101, 401, 102, and/or 402 measuring the condition of a second building or its environment, or a consumption by a functional block of said second building.

A technical advantage of the system shown in Fig. 4 is that all the sensors 401, 402 transmit their data to the same central processing unit 170. In this way, the same information on the receiving central processing unit can be programmed in all the sensors. Furthermore, information that identifies the sensor is programmed in the sensors. Because the receiving central processing unit is the same for all the sensors, sensors of the system can be placed inconsistently in different places, and furthermore, the location of the sensors can be changed, if necessary. The location of a sensor can be changed within a building, a sensor can be moved from one building to another building, a sensor can be moved from one group to another group of buildings, or a sensor can be moved from one assembly to another assembly of groups of buildings. In some other systems, there are several parties that receive information. Thus, the technical problem is how to program each sensor with the correct data on the recipient. In particular, if the location of the sensor is changed, the party to receive the data may also be changed. Thus, the sensors are not easily movable.

In an advantageous embodiment of the invention, the system comprises only one central processing unit 170, and all the sensors 101, 401, 102, 402 of the system transmit measurement data pulses via the other sensors and/or the measuring unit 410 to the central processing unit 170. Data on only this central processing unit can be stored in each measuring unit 110, 410, wherein the measuring unit 410 can forward data on the measurement data pulses received by it, for example only when the identification data of the measurement data pulse comprises exactly said central processing unit 170 as the recipient.

The sensors 401, 402 are arranged to generate a measurement data pulse containing identification and measurement data on the basis of the idenfication of the sensor, the party to receive the data, and the measurement data, as well as to transmit said measurement data pulse. If the sensor is placed close to the measuring unit 410 and far from the other sensors, the sensor does not necessarily receive information from the other sensors. This is illustrated by the reference numeral 402c in Fig. 4.

The sensors 401, 402 may also be arranged to receive a measurement data pulse from another sensor and to forward said measurement data pulse. Thus, the measurement data pulse is passed from one sensor to another in the sensor network, until the measurement data pulse arrives at the measuring unit 410. For example, sensor 402d can generate and transmit said measurement data pulse. Sensor 402e can receive said measurement data pulse and forward it. Correspondingly, sensor 402f can receive said measurement data pulse and forward it. Thus, the measuring unit 410 can receive the measurement data pulse and decode it to find out the recipient. Furthermore, the measuring unit 410 can transmit at least part of the measurement data pulse to the central processing unit, as described above.

Protocols known from wireless sensor networks (WSN) for routing the measurement data pulse can be utilized, to secure fluency of the data transmission. Thus, it can be taken into account, among other things, that the measurement data pulse does not remain circulating in the sensor network but the received measurement data pulse is forwarded only when the above-mentioned transmission criterion is met. For example, it can be defined that a sensor will forward the measurement data pulse only if the same measurement data pulse has not been forwarded previously. Correspondingly, the measuring unit 410 can acknowledge the measurement data pulse as received by sending an acknowledgement message to the sensor network. After the receipt of the acknowledgement message, the forwarding of a corresponding measurement data pulse in the sensor network can be stopped.

Also in the embodiment of Fig. 4, the measuring unit 410 comprises a storage means 115 and a channel database stored on the storage means 115. The channel database can be used as a buffer in a situation in which measurement data pulses arrive at the measuring unit 410 faster than the measuring unit 410 forwards data. If the system comprises several sensors 401, 402, it is likely that at some stage, for example during periods of high consumption, the measuring unit 410 will not be capable of transmitting data to the central processing unit 170 as quickly as the measuring unit 410 receives data.

The measuring unit 410 may be arranged to store the measurement data corresponding to each sensor in the channel database. The measuring unit may be arranged to store the latest cumulative measurement data corresponding to each sensor in the channel database.

With reference to Fig. 5, in one embodiment of the invention, the measuring unit 110, 410 comprises a communication means 510, such as a mobile phone. The measuring unit 110, 410 may comprise a separate storage means 115 (not shown in Fig. 5). Furthermore, the communication means 510 may comprise a storage means 520, such as a memory. In the embodiment shown in Fig. 5, the channel database of the measuring unit 110, 410 is provided in the memory 520 of a mobile phone 510. The mobile phone 510 is arranged to transmit measurement data from the channel database to the central processing unit 170. The mobile phone is arranged to use a normal mobile telecommunications network for the data transmission. The measuring unit 110, 410 may comprise, for example, a communication means 510 connected to it.

### Examples

In an embodiment of the invention, the condition of a building was measured in the construction phase with moisture sensors 101 installed in a wet concrete floor. An electricity sensor 102 was used to measure the consumption of electricity by drying fans and the whole building. The sensors 101, 102 transmitted the measurement results in a wireless manner to a measuring unit 110 which received the results and forwarded them to a central processing unit 170. The central processing unit 170 was arranged to receive the results and to give an alarm to the general superintendent of the construction site when the moisture reading given by the sensors 101 dropped below the required level. In this way, the superintendent was quickly informed of the drying of the site without visiting the site. With the shorter drying time, energy consumed by the drying fans was saved compared with a situation in which the drying fans would have been switched off later on, during a visit at the site.

In another embodiment of the invention, indoor and outdoor temperatures and indoor and outdoor air moisture contents were measured as ambient conditions by sensors 101. Consumption sensors 102 were used to measure the energy consumption of the whole building, the share of electricity consumption used for heating, and the heat consumption. The sensors 101, 102 transmitted the measurement results in a wireless manner to a measuring unit 110 which received the results and forwarded them to a central processing unit 170. The central processing unit 170 was arranged to receive the results and to generate an energy performance certificate for the building on the basis of the measurement results. Further, the central processing unit was arranged to calculate the emissions caused by the energy consumption and to include these in the energy performance certificate.

In a third embodiment of the invention, indoor and outdoor temperatures and indoor and outdoor air moisture contents were measured as ambient conditions by sensors 101. Furthermore, the temperatures of return and supply water and its flow rate, *i.e.* the water flow, in the heating network, as well the temperatures of return and supply water and its flow rates, *i.e.* the flows, in the circulation of hot service water were measured. For the service water, the supply and return flow rates were measured separately, because part of the circulating hot service water was used. Consumption sensors 102 were used to measure the electricity consumption in the whole building, the share of electricity consumption used for heating, the heat consumption, the total consumption of water, and the consumption of hot service water. In other respects, the system functioned substantially in the same way as in a second embodiment of the invention.

In a fourth embodiment of the invention, sensors 101 were used for measuring the indoor and outdoor temperatures, the moisture contents of indoor and outdoor air, the carbon dioxide content of indoor air, as well as the flow rate, moisture content and temperature of supply air and exhaust air from the ventilation heat exchanger. Consumption sensors 102 were used to measure the heat consumption in the whole building and the electricity consumption of the ventilation system, as well as the consumption of electricity and water in each apartment. In other respects, the system functioned substantially in the same way as in a second embodiment of the invention.

In a fifth embodiment of the invention, sensors 101 were used for measuring the indoor and outdoor temperatures, the moisture content of indoor and outdoor air, the carbon dioxide content of indoor air, as well as the flow rate, moisture content and temperature of supply air and exhaust air from the ventilation heat exchanger. On the basis of the data measured from the heat exchanger, the heat energy recovered in the heat exchanger and the efficiency of the heat recovery were determined. Furthermore, the pressure upstream and downstream of air filters was measured in the air supply units. The differences in the measured pressures were used to determine the need for cleaning and maintenance of the filters. Thus, by adjusting the efficiency of the air supply units, a sufficient flow rate in view of the air quantity was also achieved with a low energy consumption. Consumption sensors 102 were used to measure the electricity consumption in the whole building, the electricity consumption of the ventilation system, the electricity consumption of the cooling system, as well as the consumption of heat and water. In other respects, the system functioned substantially in the same way as in a second embodiment of the invention.

In a sixth embodiment of the invention, sensors 101 were used for measuring the indoor and outdoor temperatures, the moisture contents of indoor and outdoor air, the carbon dioxide content of indoor air, as well as the flow rate, moisture content and temperature of air cooled by the cooling system. the data measured from the cooling system was used to determine the heat energy removed from the apartment (that is, the cooling energy produced) by the cooling system. Consumption sensors 102 were used to measure the electricity consumption in the whole building, the electricity consumption of the ventilation system, the electricity consumption of the cooling system, the consumption of electricity for the illumination, as well as the consumption of heat and water. The measuring unit 110 was arranged as a part of the electrical switchboard of the building. In other respects, the system functioned substantially in the same way as in a second embodiment of the invention.

The above presented invention is not limited to the monitoring of buildings, but it can also be applied, among other things, for the monitoring of various manufacturing processes, within the scope of the appended claims. Furthermore, the system can be utilized for implementing the plans of heating, plumbing and air conditioning as well as electricity made at the stage of planning a building.

## Claims

1. A sensor system comprising
- at least one sensor (101, 401) for measuring ambient conditions of a building or the condition of the building;
- at least one sensor (102, 402) for measuring a consumption by a functional block of a building;
- a measuring unit (110, 410); and
- means for transmitting measurement results from the sensors (101, 401, 102, 402) directly or indirectly to the measuring unit (110, 410); **characterized in that**
- at least one sensor (101, 401, 102, 402) is arranged to transmit the measurement result directly or indirectly as a measurement data pulse to the measuring unit (110, 410);
- the measuring unit (110, 410) comprises a first storage means (115); and
- the measuring unit (110, 410) is arranged
- to receive the measurement data pulse that comprises a measurement result and
- to store the measurement result in the first storage means (115).

2. The sensor system according to claim 1, **characterized in that**
- at least one sensor (102, 402) for measuring a consumption by a functional block of a building is arranged to transmit the measurement result as a measurement data pulse at given consumption intervals.

3. The sensor system according to claim 1 or 2, **characterized in that**
- the measuring unit (110, 410) comprises a channel database for storing the measurement results.

4. The sensor system according to any of the claims 1 to 3, **characterized in that** at least one sensor (101, 401, 102, 402) of the building is arranged
- to receive a measurement data pulse and
- to transmit the received measurement data pulse.

5. The sensor system according to claim 4, **characterized in that** at least one sensor (101, 401, 102, 402) of the building comprises
- a storage means for storing data contained in several measurement data pulses.

6. The sensor system according to any of the claims 1 to 5, **characterized in that**
- at least one sensor (101, 401, 102, 402) is arranged to measure the condition of a first building or its ambient conditions or a consumption by a functional block of the first building, and
- at least one sensor (101, 401, 102, 402) is arranged to measure the condition of a second building or its ambient conditions or a consumption by a functional block of the second building.

7. The sensor system according to any of the claims 1 to 6, **characterized in that** the measuring unit (110, 410) is arranged
- to read at least one measurement result from the first storage means (115),
- to generate a measurement message by using at least one read measurement result, and
- to transmit said measurement message.

8. The sensor system according to claim 7, **characterized in that** the measuring unit (110, 410) is arranged at given intervals
- to read at least one measurement result from the first storage means (115),
- to generate a measurement message by using at least one read measurement result, and
- to transmit said measurement message.

9. The sensor system according to any of the claims 1 to 8, **characterized in that** the measuring unit (110, 410) is arranged to perform at least one of the following:
- to generate an alarm message by using a received measurement data pulse, and to transmit said alarm message, and
- to receive a control message, to generate at least one control signal on the basis of the control message, and to transmit at least one control signal.

10. The sensor system according to any of the claims 1 to 9, **characterized in that** the sensor system comprises a second measuring unit (110, 410) in addition to the first measuring unit,
- the first measuring unit (110, 410) is arranged to receive measurement data pulses from sensors (101, 401, 102, 402) measuring the condition of a first building or its environment or a consumption by a functional block of said first building, and
- the second measuring unit (110, 410) is arranged to receive measurement data pulses from sensors (101, 401, 102, 402) measuring the condition of a second building or its environment or a consumption by a functional block of said second building.

11. The sensor system according to any of the claims 1 to 12, **characterized in that**
- the system further comprises a central processing unit (170),
- the measuring unit (110, 410) is arranged to transmit a measurement message directly or indirectly to the central processing unit (170),
- the central processing unit (170) is arranged to receive said measurement message, and
- the central processing unit (170) is arranged to generate a first message by using said measurement message.

12. The sensor system according to claim 11, **characterized in that** the central processing unit (170) is arranged to transmit a first message.

13. The sensor system according to claim 11 or 12, **characterized in that** the sensor system further comprises a second storage means (175), and the central processing unit (170) is arranged
- to decode the measurement message into at least one measurement result,
- to store at least one measurement result in the second storage means (175),
- to read measurement results from the second storage means (175), to provide read measurement results, and
- to generate a second message by using the read measurement results.

14. The sensor system according to any of the claims 11 to 13, **characterized in that** the central processing unit (170) is arranged to transmit a control message.

15. The sensor system according to any of the claims 1 to 14, **characterized in that** the measuring unit (110, 410) is arranged in connection with an electrical switchboard of the building.
